# EUROPEAN PATENT APPLICATION

(11) **EP 3 486 173 A1**
(43) Date of publication of application: **22.05.2019**
(21) Application number: 18206209.1
(22) Date of filing: 14.11.2018
(51) Int. Cl.: B64D 15/16

(54) **LOW FRICTION SOLID ADDITIVES TO IMPROVE ICE SHEDDING OF PNEUMATIC DE-ICERS**

(30) Priority: 17.11.2017 US 201715816785
(71) Applicant: Goodrich Corporation, Charlotte, NC 28217-4578 (US)
(72) Inventor: HU, Jin, Hudson, OH Ohio 44236 (US); SLANE, Casey, Richwood, OH Ohio 43344 (US); CHING, Nathaniel, Hartville, OH Ohio 44632 (US)
(74) Representative: Dehns

(57) **Abstract**

A pneumatic de-icer includes an externally facing weathering surface (28) that includes a low-friction additive in the rubber mixture. The low-friction additive has a coefficient of friction of 0.10 or less, and promotes ice shedding because the additive has low ice adhesion compared to typical rubber materials used for pneumatic de-icer assemblies.

## Description

### BACKGROUND

The application relates generally to ice protection, and specifically to pneumatic de-icing devices.

An aircraft moving through the air or clouds is subjected to ice formation. Under some ice conditions, ice accumulates rapidly on leading edge surfaces. In this case, smooth airflow is destroyed, decreasing lift and increasing drag. Anti-icing or deicing devices must be used to remove or prevent ice from accumulating on exterior surfaces of the aircraft. One method of deicing is mechanical deicing, and includes the use of a pneumatic boot with inflatable tubes on a leading edge surface. The tubes inflate and deflate in order to break the adhesion of ice on the surface, exposing the cracked ice particles to the aerodynamic flow, and shedding accumulated ice and snow.

Clean shedding of ice by pneumatic de-icers is crucial for safe flights of aircraft. Rubber materials are typically used to create pneumatic de-icers. These rubber materials meet erosion and low temperature elasticity requirements for pneumatic de-icers, but do not have high quality ice shedding properties.

### SUMMARY

In one embodiment, a de-icing assembly on a leading edge surface includes a plurality of layers attached to the leading edge, wherein at least one of the plurality of layers is made from a material capable of stretching when inflated, and an external weathering surface comprising an additive with a friction coefficient of less than 0.10, the external weathering surface attached to the plurality of layers opposite the leading edge.

In another embodiment, a method of ice protection includes activating a pneumatic de-icing assembly by expanding a plurality of layers including an external weathering layer, and shedding ice off the external weathering layer of the pneumatic de-icing assembly by an interaction between additives in the weathering layer and the ice.

In another embodiment, a method of making a pneumatic de-icer includes mixing one or more additives into a weathering layer mixture, creating a weathering layer from the weathering layer mixture, assembling the weathering layer with a rubber layer, an inflating layer, and an installation layer, and finalizing the pneumatic de-icer.

### BRIEF DESCRIPTION OF THE DRAWINGS

FIGS. 1A-1B are a schematic diagrams of a pneumatic de-icer boot.
FIGS. 2A-2B are a schematic diagrams of an ice-shedding material attached to a pneumatic de-icer.
FIG. 3 is a flow diagram showing a method of making a pneumatic de-icer boot with ice-shedding material.

### DETAILED DESCRIPTION

Pneumatic de-icers require materials that not only meet erosion and low temperature elasticity requirements for de-icers in flight, but also should be made of materials with low ice adhesion and good ice shedding properties. Low-friction solid additives can be added to rubber skin materials to improve ice shedding of rubber material skin applied to pneumatic de-icers. Specifically, low friction solid additives can be added to a top layer on pneumatic de-icers to reduce friction on the external surface of the pneumatic de-icers and improve ice shedding.

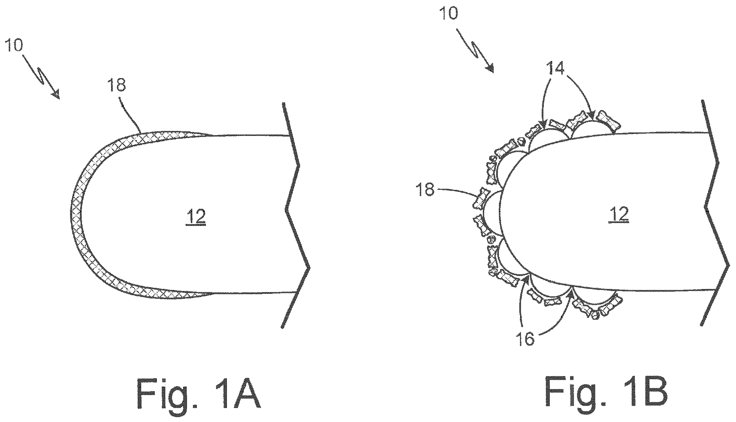

FIGS. 1A-1B are a schematic diagrams of a pneumatic de-icer boot 10. FIG. 1A shows deicing boot 10 in its uninflated state on an aircraft leading edge 12. FIG. 1B shows deicing boot 10 in its inflated state with a plurality of chambers 14, with pockets 16. When inflated, chambers 14 break up ice 18 by creating fracture and shear stresses in ice 18. This dislodges ice 18, allowing airstream across leading edge 12 to carry ice 18 away.

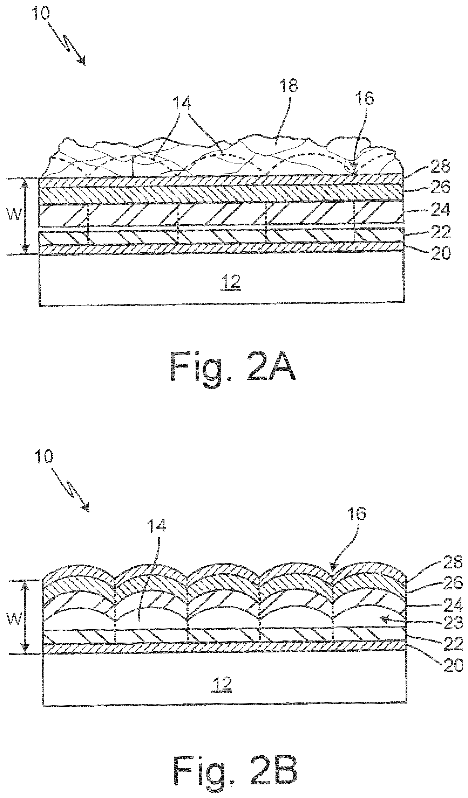

FIGS. 2A-2B are schematic diagram of an ice-shedding material incorporated into pneumatic de-icer 10. In FIGS. 2A-2B, layers 20, 22, 24, 26, and 28 in an example of a pneumatic de-icer can be seen. Layers 20, 22, 24, 26, and 28 include installation rubber layer 20, non-stretch fabric layer 22, stretch fabric 24 layer, natural rubber 26 layer, and weathering surface layer 28. Chambers 14, pockets 16, and ice 18 can be seen in FIGS. 2A-2B relative to layers 20, 22, 24, 26, and 28 of pneumatic de-icer 19. Pneumatic de-icer 10 is one example of a pneumatic device, but other arrangements with other stretch or inflatable layers may also be used.

Installation rubber layer 20 secures and attaches de-icer 10 to aircraft leading edge 12. Leading edge 12 can be, for example, the leading edge of a wing. Installation rubber layer 20 can be made of neoprene, natural rubbers, polyurethanes, or other suitable material that is sufficiently flexible and can anchor de-icer 10. Installation rubber layer 20 anchors de-icer 10 to leading edge 12 through adhesive or other means.

Non-stretch fabric layer 22 and stretch fabric layer 24 work together to provide a shape to pneumatic de-icer 10 when de-icer 10 is inflated to chambers 14. Non-stretch fabric layer 22 is typically made of a nylon/natural rubber combination, or other suitable non-stretch materials. Non-stretch fabric layer 22 is bonded to installation rubber layer 20 opposite leading edge 12 with an adhesive. Stretch fabric layer 24 is also made of nylon/natural rubber or other suitable material that can expand while maintaining a suitable shape for pneumatic de-icer 10. Stretch fabric layer 24 is attached to non-stretch fabric layer 22 with stitches or isolated adhesive such that space is left between each stitch to create chambers 14 when de-icer 10 is inflated.

Gap 23 is located between non-stretch fabric layer 22 and stretch fabric layer 24. When de-icer 10 is activated, pressurized air enters gap 23 between non-stretch fabric layer 22 and stretch fabric 24 to push layers 24, 26, 28 into inflated chambers 14 as shown in FIG. 2B. This results in stresses in ice 18 on an external surface of assembly 10, and causing ice 18 to break up and be swept away. Natural rubber layer 26 is attached with an adhesive to stretch fabric layer 24 opposite non-stretch fabric layer 22, and expands with stretch fabric layer 24 when pneumatic de-icer 10 is activated. When de-icer 10 is not activated, pressurized air is vented out of gap 23 between non-stretch fabric layer 22 and stretch fabric layer 24, leaving de-icer 10 flat as shown in FIG. 2A.

Weathering surface layer 28, attached to de-icer 10 on rubber layer 26 and facing an external surface on which ice 18 will form, is made of neoprene, polyurethane, or other appropriate material capable of stretching to form chambers 14 when de-icer 10 is activated. Weathering surface 18 is a thin layer on de-icer 10 to protect layers 20, 22, 24, 26 from erosion and the environment. In de-icer 10, weathering surface 28 contains a low friction additive that promotes ice shedding. The additive can be, for example, hexagonal boron nitride, , tungsten disulfide, molybdenum disulfide, or other dry lubricants with a friction coefficient of less than 0.1. The addition of a low friction additive allows for weathering surface 28 to shed ice at a higher rate, closer to an ideal one hundred percent ice shedding as opposed to sixty percent ice shedding common in old pneumatic devices. Ice shedding can vary based on icing conditions such as temperature, altitude, and clouds. Typically, the additive will be loaded between 0.10% and 30% in weathering surface 28. The additive loading should not be so high that mechanical and erosion properties no longer meet standards. A pneumatic de-icer system with an external skin made of a rubber material including low-friction solid additives may allow for low ice adhesion, and allows for improved ice shedding.

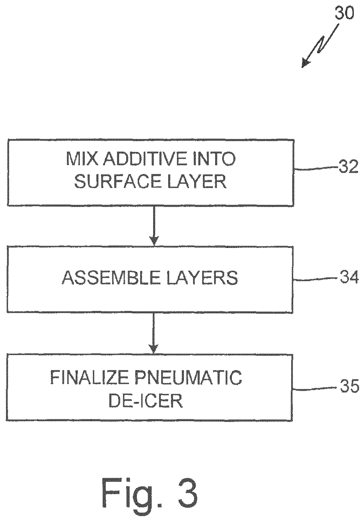

FIG. 3 is a flow diagram showing method 30 of making a pneumatic de-icer boot with ice-shedding material. Method 30 includes steps 32, 34, and 36. First, in step 32, the weathering layer is prepared by mixing an additive into the weathering layer material (typically, neoprene or polyurethane). This can be accomplished by a number of methods, including, but not limited to, such as mill mixing, ,internal mixing, extrusion, and/or , liquid mixing (such as dissolving the additive into a pre-weathering surface solution), Additives can include hexagonal boron nitride particles, , tungsten disulfide, molybdenum disulfide, or other dry lubricants with a friction coefficient of less than 0.1. Typically, the additive will be loaded between 0.10% and 30% in weathering surface material.

Next, in step 34, layers of the pneumatic de-icer are assembled. The layers include an installation layer that will be applied directly to a leading edge, anchoring the de-icer, first and second fabric layers that will create chambers when the pneumatic de-icer is activated, and a rubber layer beneath the weathering surface. The layers of the pneumatic de-icer can be assembled and attached by normal methods. For example, the layers can be laid on top of each other and joined by adhesives, followed by a curing process to consolidate the layers into a single article. Finally, in step 36, the pneumatic de-icer is finalized and installed on a leading edge.

The pneumatic de-icer discussed in references to FIGS. 2A-2B and FIG. 3 is one example of a pneumatic device to which a solid additive can be added. There are a wide variety of ways to build a pneumatic de-icer, all of which have an external surface similar to the weathering surface of FIGS. 2A-2B. The addition of low friction solid additives to the surface layer (the weathering layer of FIGS. 2A-2B) allows for increased ice shedding properties while the pneumatic device is activated.

### Discussion of Possible Embodiments

The following are non-exclusive descriptions of possible embodiments of the present invention.

A de-icing assembly on a leading edge surface includes a plurality of layers attached to the leading edge, wherein at least one of the plurality of layers is made from a material capable of stretching when inflated, and an external weathering surface comprising an additive with a friction coefficient of less than 0.10, the external weathering surface attached to the plurality of layers opposite the leading edge.

The assembly of the preceding paragraph can optionally include, additionally and/or alternatively, any one or more of the following features, configurations and/or additional components:

The additive is hexagonal boron nitride, tungsten disulfide, molybdenum disulfide, or another dry lubricant.

The external weathering surface is neoprene or polyurethane or other suitable material.

One of the plurality of layers is an installation layer attached to the leading edge surface.

The installation layer is rubber or neoprene.

The plurality of layers include a non-stretch fabric and a stretch fabric separated from the non-stretch fabric by an air gap, the stretch fabric attached to the non-stretch fabric by stitches spaced such that inflatable chambers are formed between the non-stretch fabric and the stretch fabric.

One of the plurality of layers is a rubber layer.

A method of ice protection includes activating a pneumatic de-icing assembly by expanding a plurality of layers including an external weathering layer, and shedding ice off the external weathering layer of the pneumatic de-icing assembly by an interaction between additives in the weathering layer and the ice.

The method of the preceding paragraph can optionally include, additionally and/or alternatively, any one or more of the following features, configurations and/or additional components:

The additives are selected from the group consisting of hexagonal boron nitride, tungsten disulfide, molybdenum disulfide, and other dry lubricants.

The additives have a coefficient of friction of 0.10 or less.

A method of making a pneumatic de-icer includes mixing one or more additives into a weathering layer mixture, creating a weathering layer from the weathering layer mixture, assembling the weathering layer with a rubber layer, an inflating layer, and an installation layer, and finalizing the pneumatic de-icer.

The method of the preceding paragraph can optionally include, additionally and/or alternatively, any one or more of the following features, configurations and/or additional components:

Mixing one or more additives comprises mixing mills, dry mixing, liquid dissolution, rubber compounding, extrusion, or liquid casting.

The one or more additives are hexagonal boron nitride, tungsten disulfide, molybdenum disulfide, or other dry lubricants.

The inflating layer comprises a stretch fabric and a non-stretch fabric, the stretch fabric configured to expand and create chambers.

The weathering layer mixture contains neoprene or polyurethane.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A de-icing assembly on a leading edge surface comprises:
a plurality of layers attached to the leading edge, wherein at least one of the plurality of layers is made from a material capable of stretching when inflated; and
an external weathering surface (28) comprising an additive with a friction coefficient of less than 0.10, the external weathering surface (28) attached to the plurality of layers opposite the leading edge.

2. The de-icing assembly of claim 1, wherein the additive is hexagonal boron nitride, tungsten disulfide, molybdenum disulfide, or a dry lubricant.

3. The de-icing assembly of claim 1 or 2, wherein the external weathering surface (28) is neoprene or polyurethane.

4. The de-icing assembly of claim 1, 2 or 3, wherein one of the plurality of layers is an installation layer attached to the leading edge surface.

5. The de-icing assembly of claim 4, wherein the installation layer is rubber or neoprene.

6. The de-icing assembly of any preceding claim, wherein the plurality of layers include:
a non-stretch fabric (22); and
a stretch fabric (24) separated from the non-stretch (22) fabric by an air gap, the stretch fabric (24) attached to the non-stretch fabric (22) by stitches spaced such that inflatable chambers are formed between the non-stretch fabric (22) and the stretch fabric (24).

7. The de-icing assembly of any preceding claim, wherein one of the plurality of layers is a rubber layer (26).

8. A method of ice protection comprises:
activating a pneumatic de-icing assembly by expanding a plurality of layers including an external weathering layer (28); and
shedding ice off the external weathering layer (28) of the pneumatic de-icing assembly by an interaction between additives in the weathering layer (28) and the ice.

9. The method of claim 8, wherein the additives are selected from the group consisting of hexagonal boron nitride, tungsten disulfide, molybdenum disulfide, or other dry lubricants.

10. The method of claim 8 or 9, wherein the additives have a coefficient of friction of 0.10 or less.

11. A method (30) of making a pneumatic de-icer comprises:
mixing (32) one or more additives into a weathering layer mixture;
creating a weathering layer (28) from the weathering layer mixture;
assembling (34) the weathering layer with a rubber layer, an inflating layer, and an installation layer; and
finalizing (36) the pneumatic de-icer.

12. The method of claim 11, wherein mixing one or more additives comprises mixing mills, dry mixing, liquid dissolution, rubber compounding, extrusion, or liquid casting.

13. The method of claim 11 or 12, wherein the one or more additives are hexagonal boron nitride, tungsten disulfide, molybdenum disulfide, or other dry lubricants.

14. The method of claim 11, 12 or 13, wherein the inflating layer comprises a stretch fabric and a non-stretch fabric, the stretch fabric configured to expand and create chambers.

15. The method of any of claims 11 to 14, wherein the weathering layer mixture contains neoprene or polyurethane.
